# EUROPEAN PATENT SPECIFICATION

(11) **EP 3 646 719 B1**
(45) Date of publication and mention of the grant of the patent: **01.11.2023**
(21) Application number: 18204222.6
(22) Date of filing: 02.11.2018
(51) Int. Cl.: A01F 15/08, A01D 69/06

(54) **AN AGRICULTURAL BALING MACHINE**
LANDWIRTSCHAFTLICHE BALLENPRESSE
PRESSE AGRICOLE À BALLES

(43) Date of publication of application: 06.05.2020
(73) Proprietor: CNH Industrial Belgium NV, 8210 Zedelgem (BE)
(72) Inventor: BONTE, Xavier G.J.M., 4505 PB Zuidzande (NL); DEMON, Frederik, 8310 Brugge (Sint-Kruis) (BE)
(74) Representative: CNH Industrial IP Department

(56) References cited:
- EP-A1- 3 453 250
- US-A- 5 152 357
- US-A- 5 894 718
- US-A- 6 073 426

## Description

### Background of the Invention

The invention relates to an agricultural baling machine; a combination of an agricultural baling machine with a towing vehicle; and a method of providing operative power to an agricultural baling machine.

Baling machines are well known in agriculture and are widely used to bale plant matter in fields into bales that may be conveniently and effectively handled, stored and used. Baling machines are known that bale forage products such as grass and other leaves used as hay or other types of animal feed; straw or other plant parts resulting as by-products from a harvesting operation such as combine harvesting; cotton; and other plant parts of commercial or other value.

The majority of baling machines in use in Europe are designed to be towed behind an agricultural tractor or another towing vehicle that, under the control of an operator and/or using operator-monitored software, moves the baling machine about a field and provides power to operate internal parts of the baling machine. The provision of power is effected by way of a rotatable power take-off (PTO) shaft connected to the rotary power take-off that typically is part of the tractor.

Known designs of agricultural baling machine include a pick-up, mounted at the front of the machine, that causes the ingestion of plant matter into the interior of the machine as it moves about a field. Differing internal designs of baler components are known in the part of the machine downstream of the pick-up.

One commonplace type of baling machine is often referred to as a *"rectangular baler".* This includes a cuboidal bale-forming chamber in which the ingested plant matter is compacted into a cuboidal shape by a piston or plunger that reciprocates longitudinally back and forth inside the bale-forming chamber between retracted and extended positions. Charges of plant matter repeatedly are fed into the bale-forming chamber from the pick-up by the mechanism of the baling machine. This action is timed with the motion of the plunger such that feeding of plant matter coincides with retraction of the plunger to one end of the bale-forming chamber. The plant matter then is compacted by subsequent extension strokes of the plunger along the bale-forming chamber.

The reciprocal rectilinear motion of the plunger is effected using a driveline that converts rotary drive derived from the rotating PTO shaft, connected to the baling machine above the pick-up, into reciprocal motion of the plunger. This typically is achieved by changing, in the driveline, the axis of the rotation from one parallel to the longitudinal length of the baling machine to an axis of rotation transverse thereto.

Such transverse-axis rotation is applied to a crank that is pivot-jointed to one end of a conrod the other end of which is pivot-jointed to the plunger, that is moveably captive inside the bale-forming chamber. As a result, rotation of the crank causes the reciprocal movement of the plunger.

The driveline between the power take-off of the tractor and the plunger includes a clutch that in a typical case is formed of two or more dry friction plates that are urged into mutual engagement by a hydraulic actuator or spring arrangement. Additionally a heavy flywheel (that in some baling machine designs weighs 600 kg or more) is secured to a rotatable shaft that defines or is connected to an input shaft in turn connected in use to the PTO shaft.

The flywheel is needed because the plunger during its motion is associated with very high, and highly varying, levels of power that might peak at 1500 Hp (about 1100 kW). In the absence of the flywheel it might be impossible for the rotary power take-off of a tractor to provide sufficient power to move the plunger, and very high forces might be transmitted back towards the tractor via the PTO shaft potentially causing damage to the baling machine or tractor or making the tractor-baling machine combination difficult to control.

The flywheel and the plunger present a system having a high level of inertia and, in some cases, mechanical resistance (especially when the driveline is at rest or is moving slowly). The inertia and mechanical resistance can be increased by factors such as:
- The at-rest plunger position causing an unfavourable conrod transmission angle with the consequence that plunger movement is difficult to initiate;
- Plant matter in the bale-forming chamber resisting movement of the plunger; and/or
- Larger, less compressible items, such as tree branches, litter and stones, impeding movement of the plunger in the bale-forming chamber.

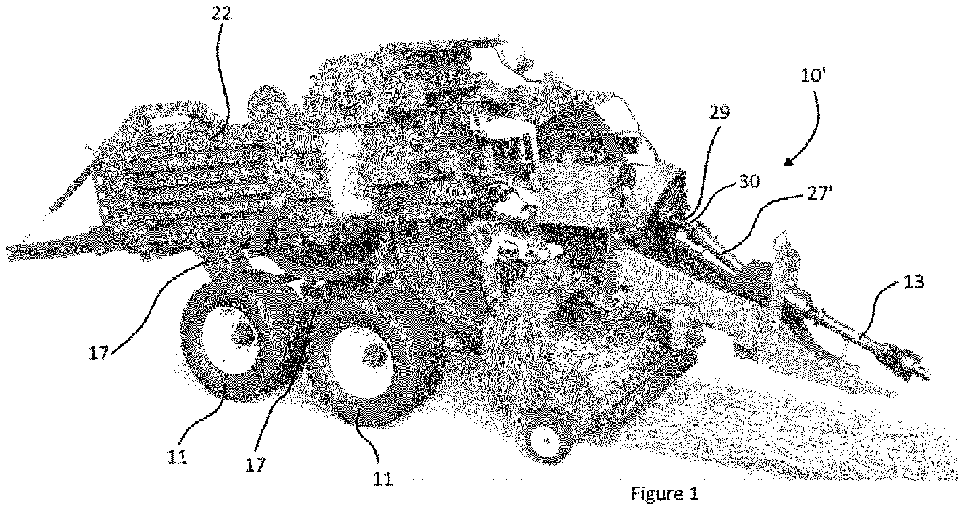

Figure 1 shows a prior art rectangular baling machine 10' that would be recognised by the person of skill in the art as a so-called *"large"* rectangular baling machine. In such a machine a frame 17 defines a chassis via which ground-engaging wheels 11 are supported on axles. In such a machine design it is desirable for a bale-forming chamber 22 forming part of the baling machine to be supported above the parts of the frame 17 to which the axles are attached. As a result the bale-forming chamber exists at a high level in the baling machine 10'.

In use of a baling machine 10' illustrated in Figure 1 a PTO shaft 13 extends at a relatively low level from the power take-off of the towing tractor and connects to a rotary input shaft 27 that extends relatively low down at the front of the baling machine 10'. The low height of the PTO shaft 13 is a necessity because of unavoidable aspects of the design of tractors.

In order to connect to drive the bale-forming plunger that reciprocates in the bale-forming chamber 22, the flywheel shaft 29 is supported in journal bearings that fix its rotational axis and extends at a significantly higher location in the baling machine 10' than the level at which the PTO shaft 13 is connected to the rotary input shaft 27.

The rotary input shaft 27 extends inclinedly upwardly from its connection to the PTO shaft 13. The PTO shaft 13 typically includes a universal joint at each end in order to accommodate the difference in the orientation of the axis of rotation of the PTO shaft from that of the rotary input shaft 27.

The rotary input shaft 27 connects by way of a further universal joint 30 to the rotary flywheel shaft 29.

Thus in a typical prior art arrangement three rotatable shafts connected by way of three universal joints are required. The differences in the angles about which the various shafts rotate are quite pronounced, with the result that the universal joints rotate at somewhat high operative angles. As is well known in universal joint engineering, operating in this manner can cause variations in shaft speeds unless expensive constant velocity joints are employed. Rotations at the angles likely in a prior art baling machine input driveline moreover can give rise to vibrations, premature wear of parts and energy losses that are undesirable.

US 5,894,718 A and US 6,073 426 A each disclose a baling machine having an input driveline in which a transmission includes meshed bevel gears. This allows for height and angle offsets to be accommodated in the input driveline in a limited way.

An aim of the invention is to ameliorate or eliminate one or more drawbacks of prior art baling machines.

Embodiments of the invention are suitable for inclusion in all baling machine types and machinery combinations disclosed herein. The disclosure of embodiments or parts of embodiments herein includes their disclosure in combination with all baling machine types and machinery combinations herein, even if these are indicated as forming part of the prior art.

The terms *"baling machine"* and *"baler"* are used synonymously herein and in the art generally.

The term *"power take-off"* is synonymous with the acronym *"PTO".*

The term *"tractor"* embraces a wide variety of machines potentially capable of towing a baling machine, as will be known to the person of skill in the art.

The term *"clutch"* except as otherwise explained embraces any design of clutch that is suitable for transferring drive in the circumstances described.

The term *"plant matter"* and derivatives potentially includes all types of matter that potentially may be ingested into a baling machine for the purpose of being formed into bales.

The terms *"piston"* and *"plunger"* in the context of the principal, moveable, bale-forming part of a bale-forming chamber are used synonymously herein.

### Summary of the Invention

According to embodiments described herein there is provided an agricultural baling machine including a rotary input shaft connected by way of an input driveline to a rotatable flywheel mounted on a flywheel shaft; and a drive converter that converts rotation of the flywheel to reciprocal rectilinear motion of a plunger in a bale-forming chamber forming part of the baling machine, in a manner compressing plant matter in the bale-forming chamber, the input driveline including a transmission having driveline components that engage one another in a drive-transferring manner connecting the rotary input shaft and the flywheel shaft, the input driveline resembles an S-shape as a result of which the rotary input shaft is disposed at a lower height in the baling machine than the flywheel shaft, wherein the transmission includes a housing and a brake located selectively to act on a rotatable component of the input driveline inside the housing.

The presence of a transmission interconnecting the rotary input shaft and the flywheel shaft advantageously reduces the need for rotational shafts connected by way of universal joints as in the prior art. This is not least because the transmission is able to connect to the rotary input shaft at the level, in the baling machine, of that shaft; and present an output shaft at the level, in the baling machine, of the flywheel shaft. The transmission thus acts as a height-changing part of the input driveline in a manner reducing the requirement for universal joint-connected shafts. The specified S-shape uniquely assists in this regard.

According to further embodiments described herein there is provided an agricultural baling machine including a rotary input shaft connected by way of a input driveline to a rotatable flywheel mounted on a flywheel shaft; and a drive converter that converts rotation of the flywheel to reciprocal rectilinear motion of a plunger in a bale-forming chamber forming part of the baling machine, in a manner compressing plant matter in the bale-forming chamber, the input driveline including a transmission having driveline components that engage one another in a drive-transferring manner connecting the rotary input shaft and the flywheel shaft, the input driveline resembles an S-shape as a result of which the rotary input shaft extends at a different angle from that of the flywheel shaft, wherein the transmission includes a housing and a brake located selectively to act on a rotatable component of the input driveline inside the housing.

Thus in embodiments the baling machine disclosed herein is capable of accommodating variations in the angles of input driveline components in a similar manner to that in which height variations are accommodated as described above. Again the S-shape of the driveline is of assistance. Positioning of the brake as specified is made possible in part because of adoption of the S-shape of the driveline as indicated. The resulting arrangement is beneficially compact.

Preferably the difference in angle at which the rotary input shaft extends compared to that of the flywheel shaft is a vertical angle difference. However it also is possible to accommodate lateral angle differences (or combinations of lateral and vertical angle differences) using the principles disclosed herein.

When the baling machine is embodied as a large rectangular baling machine in practice both height and angle variations would be accommodated in one and the same input driveline arrangement, such that a single transmission as defined would achieve both the indicated beneficial effects. However as indicated it is equally possible that only one of the indicated variations is taken account of using the principles described herein. Thus in for example a smaller baling machine than the large rectangular type a lateral (horizontal) shaft angle variation may need to be accommodated without any requirement also to accommodate a height variation.

In embodiments the transmission includes one or more clutches and the driveline components define a first transmission reduction ratio and a second, different transmission ratio that is relatively close compared to the first transmission ratio, the one or more clutches being selectively engageable and releasable selectively to engage drive via the first or the second reduction ratio.

Preferably the baling machine includes a baling machine frame to which the transmission is rigidly secured. Further preferably the transmission includes a housing the stiffness of which exceeds the stiffness of the baling machine frame. Such aspects of the design of the baling machine advantageously assist in reducing or eliminating vibrations or wear and in ensuring that the rotating parts of the driveline are presented at optimal heights and orientations.

Also disclosed herein is a combination of an agricultural baling machine as defined herein and a powered vehicle including a rotary power take-off, the powered vehicle towing the baling machine and the combination including a rotatable power take-off shaft connected between the power take-off of the powered vehicle and the rotary input shaft of the baling machine.

In a further aspect there is provided a method of powering an agricultural baling machine including a rotary input shaft connected by way of a driveline to a rotatable flywheel mounted on a flywheel shaft; and a drive converter that converts rotation of the flywheel to reciprocal rectilinear motion of a plunger, in a bale-forming chamber forming part of the baling machine, in manner compressing plant matter in the bale-forming chamber the input driveline including a transmission having driveline components that engage one another in a drive-transferring manner connecting the rotary input shaft and the flywheel shaft, wherein the input driveline resembles an S-shape as a result of which the rotary input shaft is disposed at a lower height in the baling machine than the flywheel shaft and wherein the transmission includes a housing and a brake located selectively to act on a rotatable component of the input driveline inside the housing, the method including the step of powering the rotary input shaft to rotate such that rotation of the flywheel shaft occurs at a greater height in the baling machine than rotation of the rotary input shaft.

In another aspect disclosed herein there is provided a method of powering an agricultural baling machine including a rotary input shaft connected by way of a driveline to a rotatable flywheel mounted on a flywheel shaft; and a drive converter that converts rotation of the flywheel to reciprocal rectilinear motion of a plunger, in a bale-forming chamber forming part of the baling machine, in manner compressing plant matter in the bale-forming chamber; wherein the rotary input shaft extends at a different angle, relative to a datum line of the baling machine, than the flywheel shaft; wherein the driveline includes a transmission having driveline components that engage one another in a drive-transferring manner connecting the rotary input shaft and the flywheel shaft, and wherein the transmission includes a housing and a brake located selectively to act on a rotatable component of the input driveline inside the housing, the method including the step of powering the rotary input shaft to rotate such that rotation of the flywheel shaft occurs about an axis extending at a different angle than an axis of rotation of the rotary input shaft.

Such methods give rise to similar advantages to the embodiments described herein.

Conveniently the rotary input shaft input shaft is driver-transferringly connected to a power take-off of a vehicle that is connected to tow the baling machine, the method including the steps of causing the vehicle to tow the baling machine while operating the power take-off to effect rotation of the rotary input shaft.

### Brief Description of the Drawings

There now follows a description of preferred embodiments of the invention, by way of non-limiting example, with reference being made to the accompanying drawings in which:
Figure 1 shows the driveline of a prior art large rectangular baling machine;
Figure 2 is a schematic representation of a tractor-baling machine combination in accordance with embodiments described herein;
Figure 3 is a cross-sectional view of a transmission, forming part of the baling machine visible in Figure 2, according to embodiments described herein; and
Figure 4 is a schematic representation of the driveline components of the transmission of Figure 3.

### Detailed Description of the Drawings

Referring to the drawings a baling machine 10 is shown being towed behind a towing vehicle that in the illustrated embodiment non-limitingly is an agricultural tractor 11.

The tractor 11 is a conventional tractor including a vehicle frame/body 11a, rear-mounted cab 11b, front, steerable, ground-engaging wheels 11c and rear, driven, ground-engaging wheels 11d. Tractor 11 includes at its rear end between the rear wheels 11d a power take-off 12 of a conventional design that includes a rotative coupling for a PTO shaft 13 that extends rearwardly of the tractor 11. The PTO 12 may be engaged to cause rotation of the PTO shaft 13 or disengaged, such that the shaft 13 is not powered to rotate, for example through the operation of a control lever or pushbutton.

The tractor 11 may have any of a range of engine power outputs including but not limited to 200 hp, 300 hp and 400 hp. The baling machine 10 is operable when towed by any such tractor 11.

The PTO shaft 13 may be any of a variety of lengths. A relatively short PTO shaft 13 and drawbar 14 (described below) minimises the distance between the pick-up 19 (described below) of the baling machine 10 and the tractor 11. This provides certain advantages, although in some other respects a longer PTO shaft 13 may provide good adjustment flexibility.

The partial driveline represented by the PTO 12 and PTO shaft 13 may in various types of tractor include a PTO clutch 20 that as described above seeks to protect the engine of the tractor 11 from damage caused e.g. when an excessive loading on the PTO shaft causes engine stalling. The PTO clutch 20 is shown schematically in Figure 1. It may readily be envisaged by the person of skill in the art and typically would be a one-way clutch of a kind that permits free movement when rotating in one direction, and transfers rotary drive via the PTO shaft 13 when rotating in the opposite direction. Other forms and locations are possible in respect of the clutch 20.

The baling machine 10 is secured to the rear of the tractor 11 by way of a drawbar 14 that typically is of an "A"-shape when viewed in plan and extends forwardly of the baling machine 10 below the PTO shaft 13. The drawbar 14 is pivotably secured to a conventional towing hitch at the rear of the tractor 11.

The baling machine 10 includes a housing or cover 16 that may take a variety of forms. The housing 16 in most baling machine designs includes a section 16a that is open to permit ejection of formed bales at the rear of the baling machine 10.

Panels defining the housing 16 further may be openable or removable in order to permit maintenance of the interior parts of the baling machine 10 replacement of bobbins of twine used for tying completed bales or the clearance of blockages that can arise for a variety of reasons.

The housing 16 of the baling machine 10 is secured to a baling machine frame 17 selected parts 17a, 17b, 17c, 17d of which are illustrated in Figure 1, with the complete frame 17 being omitted for ease of illustration.

The baling machine 10 is mobile and to this end it includes secured to the frame 17 two or more ground-engaging wheels 18.

In the embodiment illustrated four wheels are provided, being left and right front wheels and left and right rear wheels 18. In Figure 1 the left-hand side front and rear wheels are visible.

In this regard the front or forward end of the baling machine 10 is the end of it that is closest to the towing tractor 11, and the terms *"rear", "left", "right", "upper", "lower"* and derivative terms are interpreted accordingly and as though an observer is looking forwardly along the baling machine 10.

The wheels 18 may be mounted relative to the frame 17 by way of suspension components and passive or active steering components as would be known to the person of skill in the art, or they may be mounted more simply. The wheels 18 optionally may include tyres and/or gripping elements that are omitted from Figure 1 for ease of viewing.

A pick-up 19 projects forwardly of the baling machine 10 and is arranged to collect cut plant matter 24 lying in a field in which the baling machine 10 moves as influenced by the motion of the tractor 11. The pick-up 19 passes the plant matter to a conveyor 21. The conveyor 21 conveys the plant matter inside the baling machine 10 where it undergoes baling.

Numerous designs of pick-up 19 and conveyor 21 are known in the baling machine art and fall within the scope of embodiments disclosed herein. The precise designs of the pick-up 19 and conveyor 21 are essentially immaterial to the nature and operation of the invention, and therefore are not described in detail.

As mentioned, the baling machine 10 includes an internal bale-forming chamber 22. This is an elongate, cuboidal volume defined by chamber walls of which top and bottom walls 22a and 22c are visible in Figure 1. The bale-forming chamber 22 in a typical baling machine design extends in a fore and aft direction in an upper part of the rear of the volume enclosed by the housing 16.

The rear 22b of the bale-forming chamber coincides with the aforementioned open housing section 16a in order to allow ejection of completed bales in a *per se* known manner.

A crop flow path exists inside the baling machine 10 between the conveyor 21 and the bale-forming chamber 22. The crop flow path may readily be envisaged and is omitted from the figures for clarity.

The forwardmost end of the bale-forming chamber 22 is essentially open. A plunger 23 occupies the interior cross-section of the bale-forming chamber 22 and is constrained to move longitudinally inside the chamber 22 from the open, forward end towards and away from the rear 22b of the bale-forming chamber 22 as signified by arrow A.

The PTO shaft 13 as mentioned may be powered to rotate, in virtually all tractors in a clockwise direction when viewed from behind the tractor 11. PTO shaft 13 is connected by way of at least one, and in practice at least two two, universal joints 26 to the forwardmost end of a rotary input shaft 27 of the baling machine 10. The universal joint 26 in a well-known manner accommodates changes in the relative orientation of the tractor 11 and baling machine 10 that result from towing of the baling machine from place to place, e.g. while the baler is working or when it is travelling between fields.

The input shaft 27 is supported e.g. using journal bearings that are omitted from Figure 1 for ease of viewing and connects by way of a driveline, described in more detail below, to a rotatable flywheel 28.

Flywheel 28 is supported on a flywheel shaft 29 that also is supported using journal bearings, or a functionally similar arrangement, that further is omitted from Figure 1. The functions of the flywheel 28 are as described above, although as explained it is possible for the flywheel 28 in embodiments of the invention to be made considerably lighter than some prior art flywheels.

The rear end 29a of the flywheel shaft 29 is a rotary input to a drive converter 31 or similar transmission that by way of intermeshing gear components alters the axis of rotation of rotative energy in the baling machine 10. This drive converter 31 may be referred to as a main transmission in some examples.

The nature of the drive converter 31 thus is such that the longitudinally extending (with reference to the elongate length of the baling machine 10 as illustrated) axis of rotation of the flywheel shaft 29 becomes rotation about a transversely extending axis of a crankshaft 32.

Crankshaft 32 is connected as shown to a crank member 33 that protrudes from the drive converter 31 in a manner presenting a free end 34. The free end 34 is pivotably connected to one end of a conrod 36 the other end of which is pivotably connected, as indicated by numeral 37, to the forward side of the plunger 23.

As is apparent from Figure 1 therefore, rotation of crankshaft 32 causes rotation of crank 33, as signified by arrow B, that gives rise to the rectilinear, reciprocal motion of plunger 23 indicated by arrow A.

In this regard it is somewhat arbitrary whether crank 33 rotates clockwise or anticlockwise, since reciprocal motion of the plunger 23 may in an appropriately designed set of driveline elements be achieved regardless of the direction of rotation of the crank 33. The actual rotational direction of the crank 33 would be a consequence of the internal design of the drive converter 31. Such aspects are not relevant to an understanding of the invention, and therefore are not provided in detail herein.

Charges of plant matter 24 conveyed inside the baling machine 10 from the conveyor 21 repeatedly are at intervals fed by internal components of the baling machine 10, that are omitted from Figure 1 for clarity, into the interior of the bale-forming chamber 22 for compaction by reason of the reciprocal, rectilinear motion (arrow A) of the plunger 23. The feeding of each charge of plant matter 24 is timed to coincide with positioning of the plunger 23 at its retracted, i.e. forwardmost position, with the result that the plant matter 24 becomes compressed and compacted by the movement of the plunger 23 into bale form after it has been fed in to the bale-forming chamber 22.

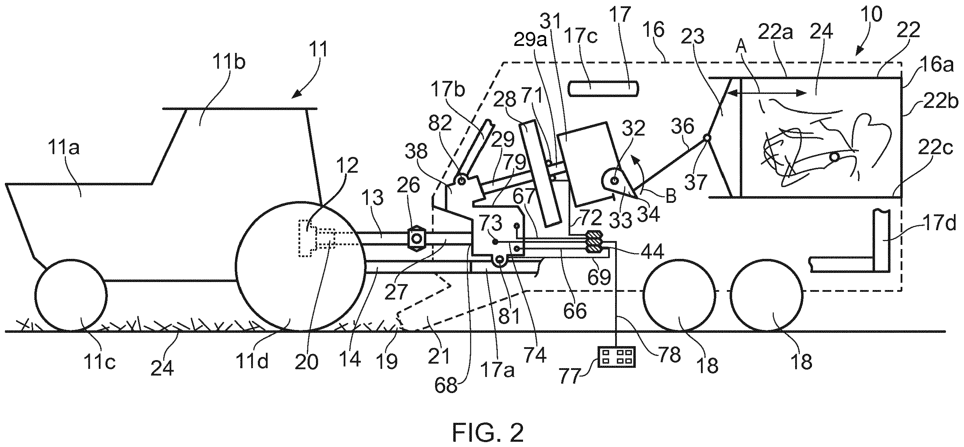

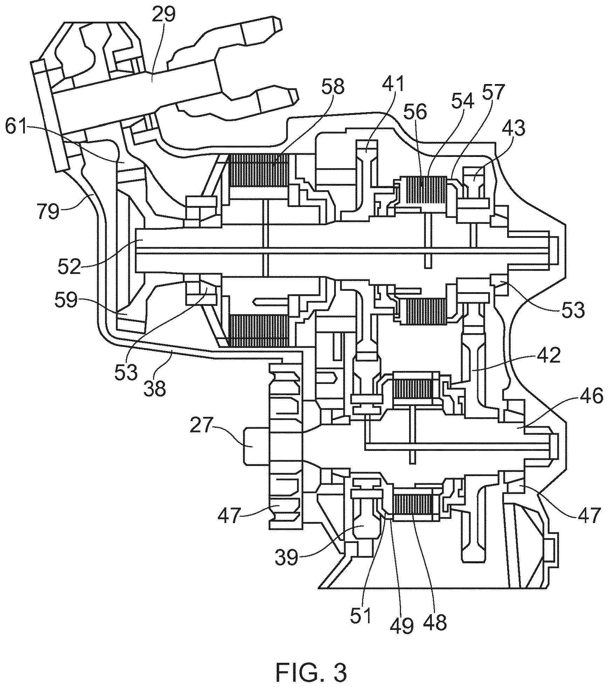

The driveline defined between the input shaft 27 and the flywheel shaft 29 includes a transmission 38 that is described below in relation to Figures 2 and 3.

In Figures 2 and 3 the rotary input shaft 27 connects to respective first and second selectable transmission ratios 39, 41; 42, 43 forming part of a driveline defined by driveline components within the transmission 38 and therefore existing between the input shaft 27 and the drive converter 31.

The first transmission ratio is defined by mutually meshing, rotary, toothed gears 39, 41 that each are supported for rotation within the transmission 38. The first transmission ratio 39, 41 is a relatively great reduction ratio transmission providing a high degree of mechanical advantage.

The second transmission ratio is defined by mutually meshing, rotary, toothed gears 42, 43 that each are supported for rotation within the transmission 38 adjacent the gears 39, 41 in a manner defining a parallel driveline to that represented by first ratio 39, 41. The second transmission ratio 42, 43 is a relatively small ratio transmission providing a higher speed of output shaft rotation than the first transmission ratio.

The baling machine 10 includes a controller non-limitingly illustrated schematically in Figure 1 in the form of a programmable microprocessor 44. The baling machine 10 includes a source of electrical power, for the microprocessor 44, that in preferred embodiments may take the form of a rotary generator that is driven directly or indirectly by the PTO shaft, although other sources of electrical power including batteries and other storage devices, or other types of generator, are possible. Combinations of electrical power sources furthermore are possible.

As indicated the controller may take a variety of forms and need not be a microprocessor as illustrated or a single component.

The microprocessor 44 is capable (typically but not necessarily as a result of software and/or firmware programming) of selectively engaging the first 39, 41 or the second 42, 43 transmission ratio. The arrangement of the components and/or the programming of the microprocessor 44 prevents the first and second transmission ratios from being selected simultaneously.

As best illustrated in Figures 2 and 3, the input shaft 27 rigidly connects to an input gear shaft 46 that is supported (non-limitingly in the embodiment illustrated by way of journal bearings 47 at either end) for rotational movement inside the transmission 38. Input gear shaft 46 is locked to gear 42 such that gear 42 always rotates with input gear shaft 46.

Input gear shaft 46 is also locked to an input side 48 of first transmission clutch 49 forming part of the driveline. As a result the input side 48 of first transmission clutch 49 also rotates with the input gear shaft.

First transmission clutch 49 is e.g. electrically or electro-hydraulically activated in the described embodiment, and is selectively engageable under command from the microprocessor 44. When engaged the output side 51 of the first transmission clutch 49 is locked to the input side 48 and rotates therewith.

The output side 51 of first transmission clutch 49 is locked to gear 39 of first transmission ratio 39, 41 such that gear 39 rotates with the output side 51.

In the illustrated embodiment the first transmission clutch 49 lies on input gear shaft 46 intermediate gears 39 and 42, but as will occur to the person of skill in the art this need not be the case, and other clutch and gear position combinations are possible.

As explained gears 42 and 43 are mutually meshed, with gear 43 supported on rotational intermediate gear shaft 52. Intermediate gear shaft 52 is supported (in the non-limiting example shown by way of journal bearings 53 at either end) for rotation relative to the remainder of transmission 38.

By reason of locking of input gear shaft 46 to gear 42, gear 43 rotates whenever input gear shaft 46 rotates, at a speed, relative to the speed of input gear shaft 46, determined by the gear tooth ratio between gears 42 and 43. However, gear 43 merely idles unless a second transmission clutch 54, which may be of a similar design to first transmission clutch 49 and hence operable under command of the microprocessor 44, is engaged.

In this respect intermediate gear shaft 52 is locked to an input side 56 of second transmission clutch 54; and an output side 57 is locked to gear 43. As a result when the clutch is engaged rotation of gear 43 is transmitted via intermediate gear shaft 52.

Gear 39 is meshed with gear 41 as explained. Gear 41 is locked to intermediate gear shaft 52. Clearly therefore to avoid locking up of the transmission it is essential that only one of the transmission clutches 49, 54 is engaged at a time. When the first transmission clutch 49 is engaged and the second transmission clutch 54 is disengaged, drive from the input shaft 27 is transmitted via meshed gears 39 and 41 to drive intermediate gear shaft 52 in accordance with the reduction transmission ratio "G1" determined by the numbers of teeth of gears 39 and 41. At this time gears 42 and 43 rotate in an idling manner.

When first transmission clutch 49 is disengaged and second transmission clutch 54 is engaged the drive of the input shaft 27 is transmitted via gears 42 and 43 to drive intermediate gear shaft 52 in accordance with the relatively small transmission ratio "G2" determined by the numbers of teeth of gears 42 and 43. Ratios G1 and G2 differ from one another. At least one of them preferably is a reduction ratio and the other may be an accelerative ratio in which the speed ratio is less than 1. However the invention is not limited to the described ratios and numerous other options are possible, it being important only that the transmission 38 includes at least two selectable ratios.

It is possible for both the clutches 49, 54 to be disengaged simultaneously. In that case gears 42 and 43 would rotate, but no drive would be transmitted to intermediate gear shaft 52.

According to the invention intermediate gear shaft 52 includes mounted thereon a brake 58 that is employed when both the transmission clutches 49, 54 are disengaged to slow the flywheel shaft 29. The latter receives the rotary drive of intermediate gear shaft 52, when one of the transmission clutches 49, 54 is closed, via meshed output gears 59, 61.

The brake 58 is located in the driveline inside a housing 79 described below. Location of the brake 58 as illustrated, or at another location in the driveline inside the housing 79, advantageously contributes to the space-efficient layout of the input driveline.

The numbers of teeth of the gears 39, 41, 42, 43, 59 and 61 may be varied extensively in all the gears of the transmission 38 depending on the precise design of the transmission 38. The overall numbers of drive-transferring components in the transmission may be varied. Also as explained the driveline elements defining the transmission ratios need not be meshing, toothed gears and instead may adopt a range of other forms, including but not limited to the examples given above.

Gear 42 as illustrated in Figure 3 may optionally additionally mesh with an auxiliary drive gear 62 that also may be supported in the transmission 38 to co-rotate with input gear shaft 46 in accordance with a transmission ratio determined by the relative numbers of teeth of gears 42 and 62.

Gear 62 is locked to an auxiliary drive shaft 63 that is supported e.g. in journal bearings for rotation with gear 62. Auxiliary drive shaft can be connected to drive one or more hydraulic pumps P1, P2, P3, P4 that may be used to energise one or more hydraulic circuits that are not shown in the drawings hereof. Such circuits may control the operation of a range of actuators that perform auxiliary functions in the baling machine 10. An example of such an actuator is hydraulic actuator 64 described below.

The transmission clutches 49 and 54 may be for example electrically (e.g. solenoid) operated, electro-mechanically operated or electro-hydraulically operated, under the control of the microprocessor 44. Preferably but not essentially the transmission clutches 49, 54 are spooled wet clutches the nature of which is familiar to the person of skill in the art and therefore does not require describing in detail herein. Wet clutches generally are highly suitable for computer or other electronic control, leading to rapid clutch engagement and disengagement.

Figure 3 shows that the clutches 49, 54 each have the same number of plates in the illustrated embodiment, but this need not be the case. Unequal numbers of clutch plates therefore are possible.

One form of control of the transmission clutches 49, 54 is illustrated schematically by electrical control signal line 66 that transmits commands from the microprocessor 44 to first transmission clutch 49; and control line 67 that transmits commands from the microprocessor 44 to second transmission clutch 54.

Two-way communication between the transmission clutches 49, 54 and the microprocessor 44 optionally is possible, either using the signal lines 66, 67 or by another means. Using two-way control the transmission clutches 49, 54 can signify e.g. their operational (i.e. engaged or disengaged) status, information on the condition of wear parts such as friction plates, levels of clutch fluid in the event of the clutches being wet clutches as is preferred and similar operational variables. The microprocessor 44 can generate commands and/or warning signals in dependence on the signals received from the transmission clutches 49, 54.

The microprocessor 44 determines the transmission ratio to be selected in dependence on conditions prevailing in the baling machine. To this end the baling machine 10 includes a number of sensors, as described in the following, for sensing the conditions of one or more parts of the driveline and operatively connected to the microprocessor 44. The microprocessor 44 operates in dependence on the outputs of the one or more sensors.

As explained it is strongly desirable to reduce or preferably eliminate slip of any clutches, such as clutches 49, 54, forming part of the driveline between the input shaft 27 and the flywheel shaft 29. Sensing of slip in the clutches and transmitting output signals, indicating the degree of slip, to the microprocessor 44, are therefore provided for in the baling machine 10.

One way of sensing slip is to sense the rotational speeds of the input shaft 27 and flywheel shaft 29, and compare the sensed speeds (adjusting for the effective prevailing transmission ratio engaged by way of the transmission 38). To this end a first rotational speed sensor 68 senses the speed of input shaft 27 and generates a signal proportional thereto. This signal preferably is transmitted via electrical signal line 69 to the microprocessor 44, although other means of signal generation and transmission (including wireless methods) are possible.

A second rotational speed sensor 71 senses the speed of flywheel shaft section 29a and generates a signal proportional thereto. This signal is transmitted via electrical signal line 72 to the microprocessor 44. As in the case of the first sensor 68, other signal generation and transmission options are possible. Calibration and subtraction of the speed signals from one another gives rise to a slip signal that is proportional to the degree of slip in the clutch 49 or 52 that is engaged at the time of sensing.

When one or more transmission clutches forming part of the driveline of the baling machine 10 is a wet clutch as is preferred, a clutch fluid flow circuit is provided. This conveys clutch fluid via the clutches, thereby giving rise to fluid *"upstream"* and *"downstream"* sides of the clutches in the fluid flow circuit. It is possible to sense the temperature of oil in the flow circuit and use this as an indication of clutch slip. For the most accurate fluid temperature-based indication of clutch slip the temperature is sensed immediately downstream of the clutches.

To this end the baling machine 10 optionally includes one or more temperature sensors for one or more of the clutches as schematically represented by numeral 73 and connected to the microprocessor 44 via electrical signal line 74 (or by another signal transmission means, including but not limited to wireless connection). The temperature sensor 73 is arranged as stated to measure the temperature of a fluid, such as the oil of a wet clutch, in a flow circuit forming part of the transmission 38. The sensor 73 generates signals indicative of the sensed temperature and these when received by the microprocessor 44 can be used to indicate whether slip is occurring in the clutch in question.

A temperature-based slip indication signal can be used in its own right to indicate slip, or it may be used to augment another slip indication such as a shaft speed comparison as described above. A temperature signal also can be used for example to help determine a recovery delay following overloading of the transmission 38.

Thus if for example slip of a clutch in the transmission 38 causes the temperature of clutch oil to rise this will be sensed by the temperature sensor 73 and a clutch rapid disengagement routine called. The microprocessor 44 then can call a routine that delays re-engagement of the clutch in question for a calculated or predetermined recovery period. Alternatively the microprocessor 44 can command repeated sampling of the oil temperature using the sensor 73 until the temperature is below a threshold value, with re-engagement of the clutch being inhibited until such a temperature is attained.

Although a single temperature sensor 73 is illustrated, this is purely to exemplify the described embodiment. Plural numbers of temperature sensors are possible and indeed likely bearing in mind the plural number of clutches provided.

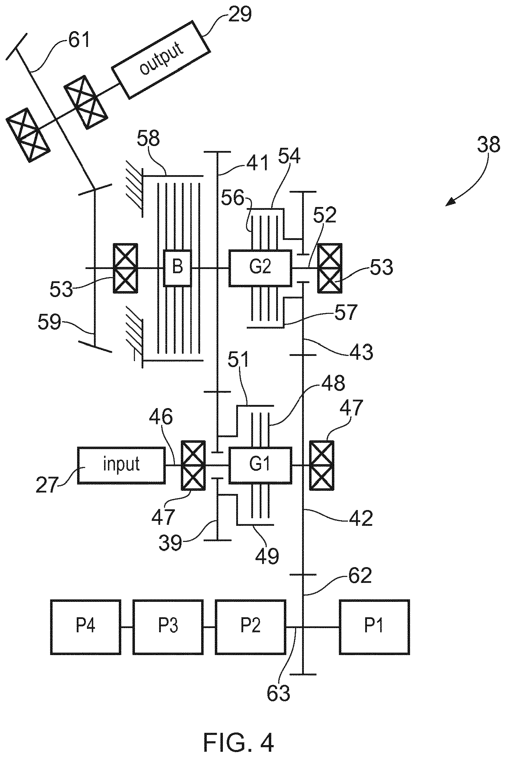

As is apparent from the foregoing description, the transmission 38 includes two drive transfer paths (respectively via the first reduction transmission ratio 39, 41 (G1) and the second transmission ratio 42, 43 (G2)) having a common output in the form of the output gears 59, 61 and the flywheel shaft 29, and of which only one drive transfer path at a time is connected in the transmission. Also as is apparent there is provided a respective clutch 49, 54 controlling whether each drive transfer path is engaged. The respective paths in each case define an essentially S-shaped driveline that is best illustrated by Figures 3 and 4. This allows the height and angle differences between the shafts 27 and 29 to be accommodated in a manner that is compact and that efficiently transfers rotational drive.

A further advantage of the S-shape of the path of the rotary drive through the transmission 38 is that the PTO shaft 13 that joins to the input shaft 27 may extend further into the baling machine than is possible in prior art balers. This means that a long PTO shaft may be retained without necessarily increasing the overall length of the combination constituted by the tractor and the towed baling machine. Use of a long PTO shaft is preferable in some situations. The S-shape of the driveline provides the advantages of using a long PTO shaft without adversely affecting for example the manoeuvrability of the tractor-baler combination when cornering.

The sensor arrangement 68, 71 for sensing slip is capable of sensing slip in either of the drive transfer paths and hence in either of the clutches 49, 54, depending on which of them is engaged. This is so notwithstanding that sensors 68, 71, measuring the rotational speed of the input shaft 27 and the flywheel shaft 29, indicate slip in the two drive transfer paths in common.

As also is apparent from the foregoing, the microprocessor 44 is capable of selectively disengaging rotary drive between the input shaft 27 and the shaft 29 supporting the flywheel 28. This possibility is explained further below in connection with operational sequences made possible by the apparatus of the invention.

In this regard a preferred operational method of the baling machine 10 is for the microprocessor 44 initially to command engagement of the first reduction transmission ratio 39, 41 during starting up of the baling machine 10, when the flywheel 28 is normally at rest. At such a time a maximal force is required to initiate movement of the flywheel 28, especially if the plunger 23 starts from a position in the bale-forming chamber 22 giving rise to an adverse transmission angle of the conrod 36 relative to the crank 33. Resistance of the plunger 23 to movement also may for various reasons vary from place to place along the bale-forming chamber with the result that certain plunger positions may give rise to a very high overall resistance to motion.

Engagement of the first reduction transmission ratio 39, 41 ameliorates the high resistance problem, by providing a drive transfer path associated with a large mechanical advantage. As a result it is expected that matching of the output of the tractor PTO 12 to the load requirement represented by the flywheel and plunger combination 28, 23 will be improved compared with the prior art. It further is expected therefore that initiation of movement of the flywheel 28 will reliably be achieved in normal circumstances, essentially regardless of the maximum output of the tractor PTO 12.

Driving of the flywheel 28 by way of the first reduction transmission ratio permits the speed at which the plunger 23 reciprocates to increase from rest to an intermediate speed that is less than the normal operational speed. Once the intermediate speed is reached the microprocessor 44 then commands disengagement of first transmission clutch 49, thereby disengaging first transmission ratio 39, 41; and engagement of second transmission clutch 54.

The latter step causes engagement of the second transmission ratio 42, 43. This permits further acceleration of the plunger 23 to its operational speed of reciprocation.

The intermediate speed may be programmed into the microprocessor 44. In the event of the controller being non-programmable a permanent logic regime (as may be provided by e.g. Op Amps or hydraulic logic circuits) may be employed, instead of a programmable logic, to effect the indicated transmission shift from the first to the second transmission ratio.

Once the flywheel 28 has been accelerated to its operational speed the energy required under normal circumstances to maintain the operational speed peaks at a considerably lower level than is required during acceleration of the flywheel 28.

The foregoing means that the baling machine 10 of the invention is capable of successful operation even if the power output of the tractor PTO 12 is less than would otherwise be required in a prior art baling machine to move the flywheel 28 from rest and accelerate it to its operational speed. This is chiefly because in an early phase of acceleration of the flywheel 28 the first transmission ratio 39, 41 is engaged and the mechanical advantage this provides means even a low power or torque output PTO acceptably is matched to the plunger energy requirement.

The baling machine 10 optionally may include one or more input devices 77, represented schematically and non-limitingly in Figure 1, by means of which information on the energy transmitted via the power take-off shaft 13 may be input to the microprocessor 44.

In Figure 1 an input device 77 is shown in the form of a keypad connected to the microprocessor 44 via an electrical cable 78, and using which e.g. the rated power output of the tractor 11 can be input to the baling machine 10. The microprocessor can select a set of decision parameters (such as the preferred speed of plunger 23 at which to transition from the first transmission ratio 39, 41 to the second transmission ratio 42, 43) that are optimised for the input power level.

The input device 77 may take a variety of other forms. These include but are not limited to a code reader that can read a code printed or affixed on part of the tractor 11, e.g. adjacent the PTO; a near-field communications (NFC) device that establishes a communications link with a microprocessor forming part of the tractor 11 in order to download power output information; or a cable connection between the microprocessor 44 and a counterpart controller forming part of the tractor 11.

The transmission 38 in preferred embodiments includes a rigid housing 79 that may be formed e.g. by casting from a metal alloy, especially a high stiffness, lightweight alloy.

As explained the baling machine 10 includes a number of frame elements 17. The housing 79 may be positioned to interconnect two or more such frame members (e.g. frame members 17a and 17b as non-limitingly illustrated in Figure 1) in a manner enhancing the stiffness of the frame 17 of the baling machine 10.

In the illustrated embodiment such interconnection is achieved by way of perforated lugs 81, 82 by means of which the housing 79 is bolted to interconnect two frame members, but as will be apparent to the person of skill in the art such interconnection may be achieved in a variety of alternative ways.

The layout of the components of the transmission 38 inside the housing 79 is such that the driveline components 39, 41 defining the first transmission ratio occupy a first vertically extending distance in the housing 79; and the driveline components 42, 43 defining the second transmission ratio occupy a second vertically extending distance in the gearbox housing, the upper limit of the second vertically extending distance terminating below the upper limit of the first vertically extending distance.

This means that the transmission 38 is compact in the longitudinal dimension of the baling machine 10, and also that the output of the transmission 38 is connected to the flywheel shaft 29 at a relatively high point in the baling machine 10. This provides several advantages in terms of transferring drive input via the input shaft 27 to the location of the plunger 23, which as mentioned is located relatively high inside the baling machine 10.

In particular the transmission 38 in effect elevates the point in the baling machine 10 at which the rotary drive of the driveline takes effect. This means that the rotary input shaft 27 may be aligned with the (relatively low) PTO shaft 13 without a need for extensive aligning arrangements; while at the same time the output rotary drive of the transmission is at a high level that is aligned with the flywheel shaft 29.

Furthermore the differing angles of the rotary input shaft 27 and the flywheel shaft 29 can readily be accommodated through the design of the transmission 38.

Overall the need for e.g. multiple universal joints is reduced, with the advantage that smoother, more efficient transfer of rotation along the driveline occurs.

As noted the housing 79 preferably is cast from a metal. This can be selected to provide desirable good stiffness characteristics with the result that the driveline is resistant to vibrations. The stiffness of the material of the housing 79 may be greater than that of the frame 17, although it is possible for the stiffness of the housing material to be the same as or lower than that of the frame 17 should particular stiffness effects be required.

Although herein the gear combination G1 is described as the first transmission and gear combination G2 the second transmission ratio, it need not be the case that the lower, in the vertical dimension of the transmission 38, gear combination is the first to be engaged. On the contrary, through appropriate choosing of the sizes, etc., of the various gears the gear combination G2 could be created as a relatively wide reduction transmission ratio that is engaged during a start-up routine and G1 as a subsequently engaged relatively close reduction transmission ratio.

As explained, more than the two gear combinations G1, G2 may be provided, giving rise in some embodiments to a two-, or three- or more-stage sequence of transmission shifts during plunger start-up rather than the single shift described. Such arrangements may include more than one intermediate shaft such as shaft 52. One or more transmission ratio optionally may be a reverse gear.

Overall the baling machine 10 described herein provides considerable benefits, as explained, over prior art baling machines.

In addition to the foregoing the invention is considered non-limitingly to reside in methods as described herein and also in a combination of a tractor 11 and baling machine 10 as described, and especially in such a combination in which the tractor 11 tows the baling machine 10 with a rotatable power take-off shaft 13 connected between the power take-off 12 of the tractor 11 and the rotary input shaft 27 of the baling machine 10.

The listing or discussion of an apparently prior-published document in this specification should not necessarily be taken as an acknowledgement that the document is part of the state of the art or is common general knowledge.

## Claims

1. An agricultural baling machine (10) including a rotary input shaft (27) connected by way of an input driveline to a rotatable flywheel (28) mounted on a flywheel shaft (29); and a drive converter (31) that converts rotation of the flywheel (28) to reciprocal rectilinear motion of a plunger (23) in a bale-forming chamber (22) forming part of the baling machine (10), in a manner compressing plant matter in the bale-forming chamber (22), the input driveline including a transmission (38) having driveline components that engage one another in a drive-transferring manner connecting the rotary input shaft (27) and the flywheel shaft (29), the input driveline resembles an S-shape as a result of which the rotary input shaft (27) is disposed at a lower height in the baling machine (10) than the flywheel shaft (29), **characterised in that** the transmission (38) includes a housing (39) and a brake (58) located selectively to act on a rotatable component of the input driveline inside the housing (39).

2. An agricultural baling machine (10) including a rotary input shaft (27) connected by way of a input driveline to a rotatable flywheel (28) mounted on a flywheel shaft (29); and a drive converter (31) that converts rotation of the flywheel (28) to reciprocal rectilinear motion of a plunger (23) in a bale-forming chamber (22) forming part of the baling machine (10), in a manner compressing plant matter in the bale-forming chamber (22), the input driveline including a transmission (38) having driveline components that engage one another in a drive-transferring manner connecting the rotary input shaft (27) and the flywheel shaft (29), the input driveline resembles an S-shape as a result of which the rotary input shaft (27) extends at a different angle from that of the flywheel shaft (29), **characterised in that** the transmission (38) includes a housing (39) and a brake (58) located selectively to act on a rotatable component of the input driveline inside the housing (39).

3. An agricultural baling machine (10) according to claim 2 wherein the difference in angle at which the rotary input shaft (27) extends from that of the flywheel shaft (29) is a vertical angle difference.

4. An agricultural baling machine according to any preceding claim wherein the transmission (38) includes one or more clutches and wherein the input driveline components define a first transmission reduction ratio (G1) and a second, different transmission ratio (G2) that is relatively close compared to the first transmission ratio, the one or more clutches being selectively engageable and releasable selectively to engage drive via the first (G1) or the second (G2) reduction ratio.

5. An agricultural baling machine according to any preceding claim including a baling machine frame (17) to which the transmission (38) is rigidly secured.

6. A combination of an agricultural baling machine (10) according to any preceding claim and a powered vehicle (11) including a rotary power take-off (12), the powered vehicle (11) towing the baling machine and the combination including a rotatable power take-off shaft (14) connected between the power take-off (12) of the powered vehicle (11) and the rotary input shaft (27) of the baling machine.

7. A method of powering an agricultural baling machine (10) according to claim 1, the method including the step of powering the rotary input shaft (27) to rotate such that rotation of the flywheel shaft (29) occurs at a greater height in the baling machine (10) than rotation of the rotary input shaft (27).

8. A method of powering an agricultural baling machine (10) according to claim 2, the method including the step of powering the rotary input shaft (27) to rotate such that rotation of the flywheel shaft (29) occurs about an axis extending at a different angle than an axis of rotation of the rotary input shaft (27).

9. A method according to claim 7 or claim 8 wherein the rotary input shaft (27) is driver-transferringly connected to a power take-off of a vehicle (11) that is connected to tow the baling machine (10), the method including the steps of causing the vehicle (11) to tow the baling machine (10) while operating the power take-off to effect rotation of the rotary input shaft (27).

## Patentansprüche

1. Landwirtschaftliche Ballenpresse (10) mit einer drehenden Eingangswelle (27), die über einen Eingangsantriebsstrang mit einem drehbaren Schwungrad (28) verbunden ist, das auf einer Schwungradwelle (29) angebracht ist;
und eine Antriebsumwandlungseinrichtung (31), die die Drehung des Schwungrads (28) in eine reziproke geradlinige Bewegung eines Kolbens (23) in einer Ballenpresskammer (22), die einen Teil der Ballenpresse (10) bildet, derart umwandelt, dass Pflanzenmaterial in der Ballenpresskammer (22) komprimiert wird,
wobei der Eingangsantriebsstrang ein Getriebe (38) umfasst, das Antriebsstrangkomponenten umfasst, die in einer antriebsübertragenden Weise ineinandergreifen und die drehende Eingangswelle (27) und die Schwungradwelle (29) verbinden, wobei der Eingangsantriebsstrang einer S-Form gleicht, wodurch die drehende Eingangswelle (27) in einer niedrigeren Höhe in der Ballenpresse (10) angeordnet ist als die Schwungradwelle (29),
**dadurch gekennzeichnet, dass**
das Getriebe (38) ein Gehäuse (39) und eine Bremse (58) umfasst, die wahlweise derart angeordnet ist, dass sie auf eine drehbare Komponente des Eingangsantriebsstrang innerhalb des Gehäuses (39) wirkt.

2. Landwirtschaftliche Ballenpresse (10) mit einer drehenden Eingangswelle (27), die über einen Eingangsantriebsstrang mit einem drehbaren Schwungrad (28) verbunden ist, das auf einer Schwungradwelle (29) angebracht ist;
und eine Antriebsumwandlungseinrichtung (31), die die Drehung des Schwungrads (28) in eine reziproke geradlinige Bewegung eines Kolbens (23) in einer Ballenpresskammer (22), die einen Teil der Ballenpresse (10) bildet, derart umwandelt, dass Pflanzenmaterial in der Ballenpresskammer (22) komprimiert wird,
wobei der Eingangsantriebsstrang ein Getriebe (38) umfasst, das Antriebsstrangkomponenten umfasst, die in einer antriebsübertragenden Weise ineinandergreifen und die drehende Eingangswelle (27) und die Schwungradwelle (29) verbinden, wobei der Eingangsantriebsstrang einer S-Form gleicht, wodurch sich die drehende Eingangswelle (27) in einem anderen Winkel erstreckt als die Schwungradwelle (29),
**dadurch gekennzeichnet, dass**
das Getriebe (38) ein Gehäuse (39) und eine Bremse (58) umfasst, die wahlweise derart angeordnet ist, dass sie auf eine drehbare Komponente des Eingangsantriebsstrang innerhalb des Gehäuses (39) wirkt.

3. Landwirtschaftliche Ballenpresse (10) nach Anspruch 2, wobei der Winkelunterschied, unter dem sich die drehende Eingangswelle (27) von der Schwungradwelle (29) erstreckt, ein vertikaler Winkelunterschied ist.

4. Landwirtschaftliche Ballenpresse nach einem der vorhergehenden Ansprüche, wobei das Getriebe (38) eine oder mehrere Kupplungen umfasst und wobei die Komponenten des Eingangsantriebsstrangs ein erstes Getriebeübersetzungsverhältnis (G1) und ein zweites, anderes Getriebeübersetzungsverhältnis (G2) definieren, das relativ nahe zu dem ersten Getriebeübersetzungsverhältnis ist, wobei die eine oder mehreren Kupplungen wahlweise eingreifbar und lösbar sind, um einen Antrieb über das erste (G1) oder das zweite (G2) Übersetzungsverhältnis einzustellen.

5. Landwirtschaftliche Ballenpresse nach einem der vorhergehenden Ansprüche mit einem Ballenpressenrahmen (17), an dem das Getriebe (38) starr befestigt ist.

6. Kombination aus einer landwirtschaftlichen Ballenpresse (10) nach einem der vorhergehenden Ansprüche und einem angetriebenen Fahrzeug (11) mit einem drehbaren Zapfwellenantrieb (12), wobei das angetriebene Fahrzeug (11) die Ballenpresse zieht und die Kombination eine drehbare Zapfwelle (14) umfasst, die zwischen dem Zapfwellenantrieb (12) des angetriebenen Fahrzeugs (11) und der drehenden Eingangswelle (27) der Ballenpresse verbunden ist.

7. Verfahren zum Antreiben einer landwirtschaftlichen Ballenpresse (10) nach Anspruch 1, wobei das Verfahren den Schritt umfasst, die drehende Eingangswelle (27) derart anzutreiben, dass sie sich derart dreht, dass die Drehung der Schwungradwelle (29) in einer größeren Höhe in der Ballenpresse (10) erfolgt als die Drehung der drehenden Eingangswelle (27).

8. Verfahren zum Antreiben einer landwirtschaftlichen Ballenpresse (10) nach Anspruch 2, wobei das Verfahren den Schritt umfasst, die drehende Eingangswelle (27) derart anzutreiben, dass sie sich derart dreht, dass die Drehung der Schwungradwelle (29) um eine Achse erfolgt, die sich unter einem anderen Winkel erstreckt als eine Rotationsachse der drehenden Eingangswelle (27).

9. Verfahren nach Anspruch 7 oder Anspruch 8, wobei die drehende Eingangswelle (27) antriebsübertragend mit einem Zapfwellenantrieb eines Fahrzeugs (11) verbunden ist, das verbunden ist, um die Ballenpresse (10) zu ziehen, wobei das Verfahren die Schritte umfasst, das Fahrzeug (11) zum Ziehen der Ballenpresse (10) zu veranlassen, während der Zapfwellenantrieb betrieben wird, um die Drehung der drehenden Eingangswelle (27) zu bewirken.

## Revendications

1. Machine à balles agricole (10) comprenant un arbre d'entrée rotatif (27) relié par une chaîne d'entraînement d'entrée à un volant d'inertie rotatif (28) monté sur un arbre de volant d'inertie (29) ; et un convertisseur d'entraînement (31) qui convertit la rotation du volant d'inertie (28) en un mouvement rectiligne réciproque d'un piston (23) dans une chambre de formation de balles (22) faisant partie de la machine à balles (10), de manière à comprimer la matière végétale dans la chambre de formation de balles (22), la chaîne d'entraînement d'entrée comprenant une transmission (38) ayant des composants de chaîne d'entraînement qui s'engagent les uns dans les autres de manière à transférer l'entraînement reliant l'arbre d'entrée rotatif (27) et l'arbre de volant d'inertie (29), la chaîne d'entraînement d'entrée a une forme de S, ce qui fait que l'arbre d'entrée rotatif (27) est disposé à une hauteur plus basse dans la machine à balles (10) que l'arbre de volant d'inertie (29), **caractérisée en ce que** la transmission (38) comprend un boîtier (39) et un frein (58) situé de manière sélective pour agir sur un composant rotatif de la chaîne d'entraînement d'entrée à l'intérieur du boîtier (39).

2. Machine à balles agricole (10) comprenant un arbre d'entrée rotatif (27) relié par une chaîne d'entraînement d'entrée à un volant d'inertie rotatif (28) monté sur un arbre de volant d'inertie (29) ; et un convertisseur d'entraînement (31) qui convertit la rotation du volant d'inertie (28) en un mouvement rectiligne réciproque d'un piston (23) dans une chambre de formation de balles (22) faisant partie de la machine à balles (10), de manière à comprimer la matière végétale dans la chambre de formation de balles (22), la chaîne d'entraînement d'entrée comprenant une transmission (38) ayant des composants de chaîne d'entraînement qui s'engagent les uns dans les autres de manière à transférer l'entraînement reliant l'arbre d'entrée rotatif (27) et l'arbre de volant d'inertie (29), la chaîne d'entraînement d'entrée a une forme de S, ce qui fait que l'arbre d'entrée rotatif (27) s'étend selon un angle différent de celui de l'arbre de volant d'inertie (29), **caractérisée en ce que** la transmission (38) comprend un boîtier (39) et un frein (58) situé de manière sélective pour agir sur un composant rotatif de la chaîne d'entraînement d'entrée à l'intérieur du boîtier (39).

3. Machine à balles agricole (10) selon la revendication 2, dans laquelle la différence d'angle à laquelle l'arbre d'entrée rotatif (27) s'étend par rapport à l'arbre de volant d'inertie (29) est une différence d'angle vertical.

4. Machine à balles agricole selon l'une quelconque des revendications précédentes, dans laquelle la transmission (38) comprend un ou plusieurs embrayages et dans laquelle les composants de la chaîne d'entraînement d'entrée définissent un premier rapport de réduction de transmission (G1) et un second rapport de transmission différent (G2) qui est relativement proche par rapport au premier rapport de transmission, le ou les embrayages pouvant être engagés et libérés sélectivement pour engager l'entraînement via le premier (G1) ou le second (G2) rapport de réduction.

5. Machine à balles agricole selon l'une quelconque des revendications précédentes, comprenant un cadre de machine à balles (17) auquel la transmission (38) est rigidement fixée.

6. Combinaison d'une machine à balles agricole (10) selon l'une quelconque des revendications précédentes et d'un véhicule motorisé (11) comprenant une prise de force rotative (12), le véhicule motorisé (11) remorquant la machine à balles et la combinaison comprenant un arbre de prise de force rotatif (14) relié entre la prise de force (12) du véhicule motorisé (11) et l'arbre d'entrée rotatif (27) de la machine à balles.

7. Procédé d'alimentation d'une machine à balles agricole (10) selon la revendication 1, le procédé comprenant l'étape d'alimentation de l'arbre d'entrée rotatif (27) pour tourner de telle sorte que la rotation de l'arbre de volant d'inertie (29) se produit à une plus grande hauteur dans la machine à balles (10) que la rotation de l'arbre d'entrée rotatif (27).

8. Procédé d'alimentation d'une machine à balles agricole (10) selon la revendication 2, le procédé comprenant l'étape d'alimentation de l'arbre d'entrée rotatif (27) pour tourner de telle sorte que la rotation de l'arbre de volant d'inertie (29) se produit autour d'un axe s'étendant à un angle différent de l'axe de rotation de l'arbre d'entrée rotatif (27).

9. Procédé selon la revendication 7 ou la revendication 8, dans lequel l'arbre d'entrée rotatif (27) est relié par transfert d'entraînement à une prise de force d'un véhicule (11) qui est relié pour remorquer la machine à balles (10), le procédé comprenant les étapes consistant à amener le véhicule (11) à remorquer la machine à balles (10) tout en actionnant la prise de force pour effectuer la rotation de l'arbre d'entrée rotatif (27).
